# FASCICULE DE BREVET EUROPEEN

(11) **EP 3 355 751 B1**
(45) Date de publication et mention de la délivrance du brevet: **04.12.2019**
(21) Numéro de dépôt: 16785228.4
(22) Date de dépôt: 27.09.2016
(51) Int. Cl.: A47J 36/02, A47J 37/10

(54) **RÉCIPIENT DE CUISSON COMPORTANT UN DISPOSITIF DE RÉCUPÉRATION D'ÉNERGIE**
KOCHBEHÄLTER MIT EINER ENERGIERÜCKGEWINNUNGSVORRICHTUNG
COOKING CONTAINER COMPRISING AN ENERGY RECOVERY DEVICE

(30) Priorité: 29.09.2015 FR 1559192
(43) Date de publication de la demande: 08.08.2018
(73) Titulaire: SEB S.A., 69130 Ecully (FR)
(72) Inventeur: LINGLIN, Benoît, 74370 Saint Martin Bellevue (FR)
(74) Mandataire: Bourrières, Patrice
(86) Numéro de dépôt international: PCT/FR2016/052451
(87) Numéro de publication internationale: WO 2017/055733

(56) Documents cités:
- WO-A1-2013/007953
- WO-A1-2015/033060
- WO-A2-2015/033059

## Description

La présente invention concerne un récipient de cuisson destiné à être disposé sur un moyen de chauffage par induction pour la cuisson d'aliments notamment une poêle, une casserole, une sauteuse, un faitout ou un autocuiseur, plus particulièrement un récipient de cuisson comportant un dispositif de récupération d'énergie générant de l'électricité à partir d'un flux magnétique produit par le moyen de chauffage par induction pour alimenter un dispositif électrique et/ou électromécanique agencé sur le récipient de cuisson.

On connaît du document FR3010293 un récipient de cuisson comportant une calotte comprenant un fond, une paroi latérale et un dispositif de récupération d'énergie destiné à coopérer avec un moyen de chauffage par induction. Le dispositif de récupération d'énergie comporte un support rigide en forme de boucle fermée agencé sur le fond et une partie latérale à la boucle s'étendant radialement sur le fond et sur la paroi latérale. Un élément conducteur isolé électriquement est fixé par dépôt au support rigide. L'élément conducteur est destiné à récupérer de l'énergie en étant le siège d'un courant électrique lorsqu'il est plongé dans le flux magnétique produit par le moyen de chauffage par induction.

Cependant, la boucle fermée du support, lorsqu'elle est plongée dans le flux magnétique produit par le moyen de chauffage par induction, est le siège d'un courant induit qui provoque un échauffement par effet joule de la boucle fermée du support. Un tel échauffement peut entrainer une dégradation de l'élément conducteur rapporté au support. WO2015/0330559 A1 divulgue également un dispositif de récupération d'énergie pour un récipient de cuisson.

Le but de la présente invention est de remédier aux inconvénients précités et de proposer un récipient de cuisson muni d'un dispositif de récupération d'énergie qui présente un fonctionnement fiable et répétitif, durable dans le temps.

Un autre but de l'invention est de proposer un récipient de cuisson muni d'un dispositif de récupération d'énergie qui soit de conception simple et économique à mettre en œuvre.

Ces buts sont atteints avec un récipient de cuisson comportant une calotte comprenant un fond, une paroi latérale et un dispositif de récupération d'énergie destiné à coopérer avec un moyen de chauffage par induction, ledit dispositif de récupération d'énergie comportant un support rigide distinct de la calotte, en forme de boucle agencé sur le fond et au moins un élément conducteur isolé électriquement et fixé par dépôt au support, notamment par sérigraphie, tampographie, projections thermiques, décalcomanie ou frittage laser, caractérisé en ce que le support comporte une boucle ouverte comportant deux extrémités libres et deux extensions s'étendant radialement sans se toucher à partir des deux extrémités libres, du fond vers la paroi latérale et en ce que l'élément conducteur est fixé par dépôt à la boucle ouverte et aux deux extensions.

Ainsi, le dispositif de récupération d'énergie comporte un support qui présente une boucle ouverte et deux extensions qui, lorsqu'elles sont plongées dans le flux magnétique produit par le moyen de chauffage par induction, ne permettent pas la circulation d'un courant induit, contrairement à une boucle fermée. En conséquence, la boucle du support ne s'échauffe pas par effet joule, ce qui améliore la durée de vie de l'élément conducteur fixé par dépôt au support.

Par l'élément conducteur est fixé par dépôt au support rigide, on comprend que l'élément conducteur n'a pas de rigidité propre avant d'être déposé et solidarisé au support rigide. Avantageusement, l'élément conducteur comporte une poudre métallique qui est fixée au support par un procédé thermique. De manière encore plus avantageuse, la poudre métallique peut être associée à un liant pour former un liquide pâteux qui facilite sa dépose. Dans une variante, la poudre est associée à un liant pour former une piste agencée sur un support temporaire avant son dépôt sur le support rigide.

Dans le dispositif de récupération d'énergie, le support n'a pas de fonction de récupération d'énergie. Seul l'élément conducteur placé dans le flux magnétique produit par le moyen de chauffage par induction assure la récupération d'énergie.

Avantageusement, le support est réalisé en un matériau non ferromagnétique, notamment un inox austénitique.

Cette disposition permet d'éviter un échauffement du support lorsqu'il est plongé dans le flux magnétique produit par le moyen de chauffage par induction.

De préférence, la calotte comporte un logement de réception du support permettant au fond d'être inscrit dans un plan.

Cette disposition permet à la surface du fond de coopérer correctement avec un moyen de chauffage présentant une surface de pose plane.

Avantageusement, le support comporte une face externe orientée vers l'extérieur de la calotte et destinée à être agencée en vis-à-vis du moyen de chauffage par induction, l'élément conducteur étant agencé sur ladite face externe et la face externe munie de l'élément conducteur est agencée en retrait d'une distance d du plan dans lequel est inscrit le fond.

Ainsi, lorsque le récipient de cuisson coopère avec le moyen de chauffage par induction, l'élément conducteur est agencé à une distance d, au plus près de l'inducteur du moyen de chauffage par induction pour optimiser la récupération d'énergie. De plus, un espace entre l'élément conducteur et la surface plane de pose est créé. Un tel espace permet d'éviter des chocs sur l'élément conducteur lors des déposes successives sur le moyen de chauffage ou sur un plan de travail.

De préférence, la distance d est comprise entre 0,1 et 2 millimètres.

Une telle distance entre l'élément conducteur et le plan dans lequel s'inscrit le fond est un bon compromis pour permettre une bonne capacité de récupération d'énergie et une bonne capacité de protection.

Avantageusement, le récipient de cuisson comporte une plaque métallique réalisée en un matériau ferromagnétique et le logement de réception du support est réalisé dans la plaque métallique.

De préférence, le support comporte des moyens de fixation sur la plaque métallique.

Dans le cas où le support présente une surface interne non revêtue, une telle disposition permet de favoriser un contact de la face interne du support avec la plaque métallique et ainsi d'éviter de former des boucles entre 2 points de contact qui génèrent des courants induits dans le support.

Avantageusement, le support est constitué par une lame métallique présentant une section sensiblement constante.

Cette disposition permet de réaliser un support mis en forme à partir d'un élément extrudé ou filé de matière première. Ainsi, le procédé de fabrication d'un tel support est particulièrement économique.

De préférence, le support présente une section rectangulaire sensiblement constante, d'épaisseur e comprise entre 0,5 et 2 millimètres, de préférence de 0,5 à 0,8 millimètre.

Cette disposition permet d'obtenir un support présentant une rigidité suffisante pour être manipulé lors de sa fabrication avant d'être rapporté sur la calotte, mais suffisamment fin pour pouvoir être facilement agencé dans le fond du récipient de cuisson.

De préférence, l'élément conducteur est entouré d'une couche isolante formée par un dépôt de matériau résistant à une température supérieure à 350°C, notamment de fritte de verre, de céramique ou d'émail.

Cette disposition permet d'obtenir un dispositif électrique qui supporte les températures élevées et les agressions chimiques des agents lessiviels lors du lavage, notamment dans un lave-vaisselle. De plus, le type de process de réalisation de la couche isolante peut être du même type que le process de réalisation de l'élément conducteur.

De préférence, le récipient de cuisson est une poêle, une casserole, une sauteuse, un faitout ou un autocuiseur.

L'invention sera mieux comprise à l'étude des modes de réalisation pris à titre nullement limitatif et illustrés dans les figures annexées dans lesquelles :
- La figure 1 illustre une vue en perspective d'une calotte d'un récipient de cuisson munie d'un dispositif de récupération d'énergie selon un mode particulier de réalisation de l'invention.
- La figure 2 illustre une vue en perspective éclatée de la calotte et du dispositif de récupération d'énergie de la figure 1.
- La figure 3 illustre une vue de détail en coupe de la calotte et du dispositif de récupération d'énergie de la figure 1 suivant la ligne III-III.

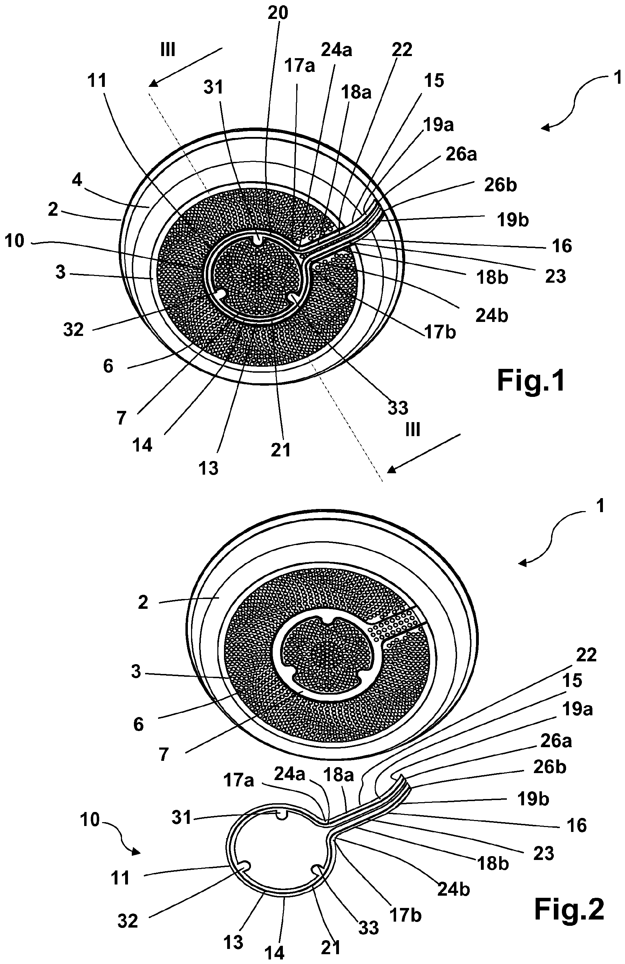

Selon un mode de réalisation visible aux figures 1 à 3, un récipient de cuisson 1 comporte une calotte 2 comprenant un fond 3 et une paroi latérale 4. La calotte 2 comporte un dispositif de récupération d'énergie 10 qui est encastré dans le fond 3. Le dispositif de récupération d'énergie 10 comporte un support 11 rigide, distinct de la calotte 2.

La calotte 2 comporte une plaque 6 métallique perforée fixée par frappe sur le fond 3. La plaque 6 métallique est réalisée en inox ferromagnétique pour assurer la compatibilité avec un moyen de chauffage par induction. Le fond 3 comporte un logement 7 réalisé également par frappe, de préférence lors de l'opération de sertissage de la plaque 6 métallique sur le fond 3. Le logement 7 présente une forme adaptée à recevoir le support 11. Le support 11 est positionné dans le logement 7, notamment pour que le fond 3 présente une surface plane destinée à être posée sur le plan de pose d'un moyen de chauffage.

Le support 11 présente une boucle ouverte 14 agencée de manière concentrique avec le fond 3. La boucle ouverte 14 comporte deux extrémités 17a, 17b à partir desquelles s'étendent deux extensions 15, 16, du fond 3 vers la paroi latérale 4. Chaque extension 15, 16 comporte une partie droite 18a, 18b, latérale à la boucle ouverte 14 et s'étendant radialement sur le fond 3 et une partie recourbée 19a, 19b s'étendant sur la paroi latérale 4. De préférence, les deux extensions 15, 16 sont parallèles et ainsi, un espace sépare les deux extensions 15, 16 pour éviter qu'elles ne se touchent.

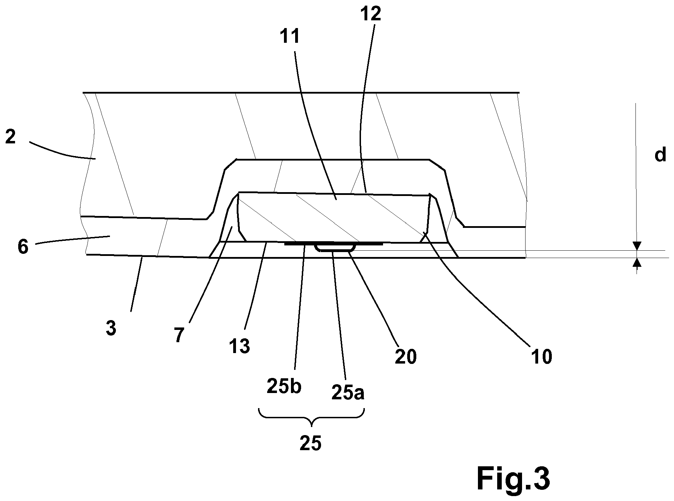

Le support 11 comporte une face interne 12 (Fig.3) orientée vers la calotte 2 et une face externe 13 orientée vers l'extérieur de la calotte 2. Un élément conducteur 20 est fixé par dépôt sur la face externe 13 du support 11. L'élément conducteur 20 est destiné à coopérer avec le moyen de chauffage par induction. L'élément conducteur 20 forme une bobine générant de l'électricité à partir d'un champ magnétique produit par le moyen de chauffage par induction lorsque le récipient de cuisson est posé sur le moyen de chauffage. L'électricité générée par la bobine permet d'alimenter un dispositif électrique et/ou électromécanique agencé sur le récipient de cuisson (non représenté sur les figures).

L'élément conducteur 20 agencé sur le support 11 présente une boucle ouverte 21 munie de deux extrémités 24a, 24b depuis lesquelles s'étendent radialement deux portions latérales 22, 23. La boucle ouverte 21 est agencée sur la boucle ouverte 14 du support 11 et les portions latérales 22, 23 sur les parties droites 18a, 18b et les parties recourbées 19a, 19b. L'élément conducteur 20 est isolé électriquement par une couche isolante 25 (Fig.3). L'élément conducteur 20 et la couche isolante 25 sont fixés sur le support 11 par dépôt. L'élément conducteur 20 comporte deux extrémités 26a, 26b destinées à être reliées électriquement avec un circuit de commande agencé, par exemple, dans une poignée (non représentée sur les figures). Le circuit de commande peut comporter, par exemple, des moyens de traitement et d'affichage et/ou des moyens de communication avec le moyen de chauffage ou un terminal distant.

La boucle ouverte du support 11 comporte trois excroissances internes 31, 32, 33 agencés à 120° pour permettre la fixation par soudure du support 11 sur la plaque 6 métallique dans le logement 7. Le fond 3 est compris dans un plan et la face externe 13 munie de l'élément conducteur 20 est agencée en retrait du plan dans lequel s'inscrit le fond d'une distance d. Avantageusement, la distance d est comprise entre 0,1 et 2 millimètres.

Par un support 11 distinct de la calotte 2, on comprend que le support 11 et la calotte 2 sont deux pièces différentes. Le support 11 muni de l'élément conducteur 20 peut être réalisé comme un sous-ensemble. Le support 11 est constitué par une lame métallique de section rectangulaire sensiblement constante dont la largeur est comprise entre 5 et 30 millimètres, de préférence 10 millimètres et dont l'épaisseur et comprise entre 0,3 et 3 millimètres, de préférence 0,8 millimètre. Le matériau dans lequel est réalisé le support 11 est un acier inoxydable, de préférence austénitique. Le support 11 est mis en forme puis on dépose sur la face externe une première partie 25a (Fig.3) de la couche isolante 25, par exemple une fritte de verre. On dépose ensuite l'élément conducteur 20, par exemple une fritte à base d'argent. Enfin, on dépose une deuxième partie 25b de la couche isolante 25.

En fonctionnement, l'utilisateur pose sur le moyen de chauffage la calotte 2 du récipient de cuisson 1. Le récipient de cuisson 1 peut comporter une poignée qui comprend un dispositif électrique ou électromagnétique (non représentée sur les figures). L'utilisateur met en marche le moyen de chauffage par induction. La bobine de l'élément conducteur 20 placée dans le champ magnétique généré par le moyen de chauffage par induction fournit alors un courant transmis au dispositif électrique ou électromagnétique agencé sur le récipient de cuisson 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le dispositif de récupération d'énergie comporte un support muni de deux éléments conducteurs agencés côte à côte pour augmenter la quantité d'énergie récupérée.

## Revendications

1. Récipient de cuisson (1) comportant une calotte (2) comprenant un fond (3), une paroi latérale (4) et un dispositif de récupération d'énergie (10) destiné à coopérer avec un moyen de chauffage par induction, ledit dispositif de récupération d'énergie (10) comportant un support (11) rigide distinct de la calotte (2), en forme de boucle agencé sur le fond (3) et au moins un élément conducteur (20) isolé électriquement et fixé par dépôt au support (11), notamment par sérigraphie, tampographie, projections thermiques, décalcomanie ou frittage laser, **caractérisé en ce que** le support (11) comporte une boucle ouverte (14) comportant deux extrémités libres (17a, 17b) et deux extensions (15, 16) s'étendant radialement sans se toucher à partir des deux extrémités libres (17a, 17b), du fond (3) vers la paroi latérale (4) et **en ce que** l'élément conducteur (20) est fixé par dépôt à la boucle ouverte (14) et aux deux extensions (15, 16).

2. Récipient de cuisson (1) selon la revendication 1, **caractérisé en ce que** le support (11) est réalisé en un matériau non ferromagnétique, notamment un inox austénitique.

3. Récipient de cuisson (1) selon l'une quelconque des revendications précédentes, **caractérisé en ce que** la calotte (2) comporte un logement (7) de réception du support (11) permettant au fond (3) d'être inscrit dans un plan.

4. Récipient de cuisson (1) selon la revendication 3, **caractérisé en ce que** le support (11) comporte une face externe (13) orientée ver l'extérieur de la calotte (2) et destinée à être agencée en vis-à-vis du moyen de chauffage par induction, **en ce que** l'élément conducteur (20) est agencé sur ladite face externe (13) et **en ce que** la face externe (13) munie de l'élément conducteur (20) est agencée en retrait d'une distance d, du plan dans lequel est inscrit le fond (3).

5. Récipient de cuisson (1) selon la revendication 4, **caractérisé en ce que** la distance d est comprise entre 0,1 et 2 millimètres.

6. Récipient de cuisson (1) selon l'une quelconque des revendications 3 à 5, **caractérisé en ce qu'**il comporte une plaque (6) métallique réalisée en un matériau ferromagnétique et **en ce que** le logement (7) de réception du support (11) est réalisé dans la plaque (6) métallique.

7. Récipient de cuisson (1) selon la revendication 6, **caractérisé en ce que** le support (11) comporte des moyens de fixation (31, 32, 33) sur la plaque (6) métallique.

8. Récipient de cuisson (1) selon l'une quelconque des revendications précédentes, **caractérisé en ce que** le support (11) est constitué par une lame métallique présentant une section sensiblement constante.

9. Récipient de cuisson (1) selon la revendication 8, **caractérisé en ce que** le support (11) présente une section rectangulaire d'épaisseur e comprise entre 0,3 et 3 millimètres, de préférence de 0,5 à 0,8 millimètre.

10. Récipient de cuisson (1) selon l'une quelconque des revendications précédentes, **caractérisé en ce que** l'élément conducteur (20) est entouré d'une couche isolante (25) formée par un dépôt de matériau résistant à une température supérieure à 350°C, notamment de fritte de verre, de céramique ou d'émail.

11. Récipient de cuisson (1) selon l'une des revendications 1 à 10, **caractérisé en ce qu'**il est une poêle, une casserole, une sauteuse, un faitout ou un autocuiseur.

## Patentansprüche

1. Kochgefäß (1), aufweisend eine Haube (2), die einen Boden (3) umfasst, eine Seitenwand (4) und eine Energierückgewinnungsvorrichtung (10), die dazu bestimmt ist, mit Induktionsheizmitteln zusammenzuwirken, wobei die Energierückgewinnungsvorrichtung (10) einem starren Träger (11), der von der Haube (2) getrennt ist, in Form eines Rings, der au dem Boden (3) angeordnet ist , und mindestens ein leitendes Element (20) aufweist, das elektrisch isoliert ist und durch Ablagerung an dem Träger (11), insbesondere durch Siebdruck, Tampondruck, thermisches Spritzen, Farbabzug oder Lasersintern, befestigt ist, **dadurch gekennzeichnet, dass** der Träger (11) einen offenen Ring (14), der zwei freie Enden (17a, 17b) und zwei Verlängerungen (15, 16) aufweist, die sich radial von den beiden freien Enden (17a, 17b), ohne sich zu berühren, von dem Boden (3) zu der Seitenwand (4) erstrecken, und dass das leitende Element (20) durch Ablagerung an dem offenen Ring (14) und an den beiden Verlängerungen (15, 16) befestigt ist.

2. Kochgefäß (1) nach Anspruch 1, **dadurch gekennzeichnet, dass** der Träger (11) aus einem nicht ferromagnetischen Material, insbesondere einem austenitischen Edelstahl, hergestellt ist.

3. Kochgefäß (1) nach einem der vorstehenden Ansprüche, **dadurch gekennzeichnet, dass** die Haube (2) ein Gehäuse (7) zur Aufnahme des Trägers (11) aufweist, das es dem Boden (3) ermöglicht, in einer Ebene zu verlaufen.

4. Kochgefäß (1) nach Anspruch 3, **dadurch gekennzeichnet, dass** der Träger (11) eine Außenseite (13) aufweist, die zum Äußeren der Haube (2) hin ausgerichtet ist und dazu bestimmt ist, gegenüber dem Induktionsheizmittel angeordnet zu sein, dass das leitende Element (20) auf der Außenseite (13) angeordnet ist, und dass die mit dem leitenden Element (20) versehene Außenseite (13) um einen Abstand d hinter der Ebene, in der der Boden (3) verläuft, angeordnet ist.

5. Kochgefäß (1) nach Anspruch 4, **dadurch gekennzeichnet, dass** der Abstand d zwischen 0,1 und 2 Millimeter liegt.

6. Kochgefäß (1) nach einem der Ansprüche 3 bis 5, **dadurch gekennzeichnet, dass** es eine Metallplatte (6), die aus einem ferromagnetischen Material hergestellt ist, aufweist, und dass das Gehäuse (7) zur Aufnahme des Trägers (11) in der Metallplatte (6) hergestellt ist.

7. Kochgefäß (1) nach Anspruch 6, **dadurch gekennzeichnet, dass** der Träger (11) Befestigungsmittel (31, 32, 33) auf der Metallplatte (6) aufweist.

8. Kochgefäß (1) nach einem der vorstehenden Ansprüche, **dadurch gekennzeichnet, dass** der Träger (11) aus einer Metallklinge besteht, die einen im Wesentlichen konstanten Querschnitt vorweist.

9. Kochgefäß (1) nach Anspruch 8, **dadurch gekennzeichnet, dass** der Träger (11) einen rechteckigen Querschnitt mit einer Dicke e zwischen 0,3 und 3 mm, vorzugsweise 0,5 bis 0,8 mm, vorweist.

10. Kochgefäß (1) nach einem der vorstehenden Ansprüche, **dadurch gekennzeichnet, dass** das leitende Element (20) von einer Isolierschicht (25) umgeben ist, die durch eine Ablagerung von Material gebildet ist, das gegenüber einer Temperatur von mehr als 350 °C beständig ist, insbesondere aus Sinterglas, Keramik oder Emaille.

11. Kochgefäß (1) nach einem der Ansprüche 1 bis 10, **dadurch gekennzeichnet, dass** es sich um eine Pfanne, einen Topf, eine Bratpfanne, einen Schmortopf oder einen Schnellkochtopf handelt.

## Claims

1. Cooking container (1) comprising a bowl (2) that comprises a base (3), a side wall (4) and an energy recovery device (10) intended to engage with an induction heating means, said energy recovery device (10) comprising a rigid holder (11) that is separate from the bowl (2), in the shape of a loop arranged on the base (3) and at least one electrically insulated conductive element (20) and attached by means of deposition to the support (11), in particular by means of screen printing, pad printing, thermal spraying, decalcomania or laser sintering, **characterised in that** the support (11) comprises an open loop (14) that comprises two free ends (17a, 17b) and two extensions (15, 16) that extend radially without touching one another starting at the two free ends (17a, 17b), from the base (3) towards the side wall (4) and **in that** the conductive element (20) is attached by deposition to the open loop (14) and to the two extensions (15, 16).

2. Cooking container (1) according to claim 1, **characterised in that** the support (11) is made from a non-ferromagnetic material, in particular austenitic stainless steel.

3. Cooking container (1) according to any one of the preceding claims, **characterised in that** the bowl (2) comprises a housing (7) for receiving the support (11) allowing the base (3) to be inscribed in a plane.

4. Cooking container (1) according to claim 3, **characterised in that** the support (11) comprises an external face (13) oriented outwards of the bowl (2) and intended to be arranged facing the induction heating means, **in that** the conductive element (20) is arranged on said external face (13) and **in that** the external face (13) provided with the conductive element (20) is arranged retracted by a distance d, from the plane in which the base (3) is inscribed.

5. Cooking container (1) according to claim 4, **characterised in that** the distance d is between 0.1 and 2 millimetres.

6. Cooking container (1) according to any one of claims 3 to 5, **characterised in that** it comprises a metallic plate (6) made from a ferromagnetic material and **in that** the housing (7) for receiving the support (11) is made in the metallic plate (6).

7. Cooking container (1) according to claim 6, **characterised in that** the support (11) comprises means of fastening (31, 32, 33) on the metallic plate (6).

8. Cooking container (1) according to any one of the preceding claims, **characterised in that** the support (11) is formed by a metallic blade that has a substantially constant section.

9. Cooking container (1) according to claim 8, **characterised in that** the support (11) has a rectangular section with a thickness e between 0.3 and 3 millimetres, preferably from 0.5 to 0.8 millimetre.

10. Cooking container (1) according to any one of the preceding claims, **characterised in that** the conductive element (20) is surrounded by an insulating layer (25) formed by a deposition of a material that resists temperatures greater than 350°C, in particular glass, ceramic or enamel frit.

11. Cooking container (1) according to any one of claims 1 to 10, **characterised in that** it is a pan, a pot, a frying pan, a Dutch oven or a pressure cooker.
